# EUROPEAN PATENT SPECIFICATION

(11) **EP 2 096 937 B1**
(45) Date of publication and mention of the grant of the patent: **12.01.2011**
(21) Application number: 07847172.9
(22) Date of filing: 15.11.2007
(51) Int. Cl.: A23F 3/10

(54) **PROCESS FOR THE PREPARATION OF THEAFLAVIN-ENHANCED TEA PRODUCTS**
VERFAHREN ZUR HERSTELLUNG VON MIT THEAFLAVIN ANGEREICHERTEN TEEPRODUKTEN
PROCÉDÉ DE FABRICATION DE PRODUITS DE THÉ AMÉLIORÉS PAR DE LA THÉA FLAVINE

(30) Priority: 01.12.2006 EP 06125217; 24.04.2007 IN MU07922007; 05.07.2007 EP 07111788
(43) Date of publication of application: 09.09.2009
(73) Proprietor: Unilever PLC, London EC4Y 0DY (GB); Unilever N.V., 3013 AL Rotterdam (NL)
(72) Inventor: MULLICK, Ashim, Mumbai 560 066 (IN); PUTREVU, Saroja Mani, Hyderabad 500 028 (IN)
(74) Representative: Keenan, Robert Daniel
(86) International application number: PCT/EP2007/062373
(87) International publication number: WO 2008/065006

(56) References cited:
- WO-A-2006/048122
- WO-A2-2008/065007
- WO-A2-2008/065007
- US-A- 3 392 028
- US-A- 6 113 965

## Description

### Technical Field of the Invention

The invention relates to the field of processing of tea. It particularly relates to a process for preparation of theaflavin-enhanced tea product.

### Background of the Invention

Any discussion of the prior art throughout the specification should in no way be considered as an admission that such prior art is widely known or forms part of the common general knowledge in the field.

Theaflavins are compounds characterised by the presence of the benzotropolone ring and are formed when tea leaf is enzymatically oxidized, or fermented to produce black tea. Theaflavins are unique to black tea and oolong tea with theaflavin (TF1), theaflavin-3-monogallate (TF2), theaflavin-3'-monogallate (TF3) and theaflavin-3-3'-digallate (TF4) being the four major species present. In tea leaves, epicatechin (EC) and epicatechin gallate (ECG) are simple catechins, while epigallocatechin (EGC) and epigallocatechin gallate (EGCG) are gallocatechins which participate in the formation of the four theaflavin species. The oxidative biotransformation of catechins, like other biotransformations, is complex and involves multitude of reaction pathways resulting into dimeric theaflavins and higher molecular weight compounds known as thearubigins.

Theaflavins are known to have antioxidant, antimicrobial and anti-inflammatory properties. Theaflavins have been reported as being effective against various diseases including cancer, cardiovascular and cerebro-vascular diseases, diabetes, and hypercholesterolemia. However, normal levels of theaflavins present in tea are 1-2 % on dry weight basis, depending on factors such as geographical location of tea and variety of tea. It is therefore desirable to obtain tea products with enhanced level of theaflavin. In the past, researchers have tried to enhance theaflavin in tea products by various approaches.

Cloughley and Ellis (J. Sci. Food Agric. 31 (1980) 924-934) have described a method of theaflavin-enhancement of tea by carrying out fermentation step at a low pH. However, tea obtained by this method may have residual acidity which can cause curdling of milk when added while preparing a milked tea beverage.

US6113965 (2000, Lipton) discloses a method for producing theaflavin by separating theaflavin from a slurry oxidative fermentation product of green leaf tea that has been treated with tannase prior to slurry oxidative fermentation. It also teaches methods for making theaflavin-rich extracts and cold water soluble tea powders and products are provided.

However, enhancement of theaflavin obtainable by the above methods is limited and there is a continuing need for tea products having further enhanced levels of theaflavin.

In addition, the methods reported in prior art have been found to be expensive and therefore there is a further need for a cost-effective method of preparing theaflavin-enhanced tea products.

It is an object of the present invention to overcome or ameliorate at least one of the disadvantages of the prior art, or to provide a useful alternative.

One of the objects of the present invention is to provide a process for preparing a theaflavin-enhanced tea product comprising higher levels of total theaflavin as compared to prior art methods.

Another object of the present invention is to provide a process for preparing a theaflavin-enhanced tea product in a cost-effective manner.

The present inventors have surprisingly found that presence of exogenous epicatechin during enzymatic fermentation of a tea-source leads to a theaflavin-enhanced tea product.

WO 2008/065007 A was published on 5 June 2008 and discloses a process for producing a product enriched in theaflavins comprising contacting a portion of a first material comprising theaflavins and a portion of a second material comprising catechins to form a reaction mixture with a specific weight ratio of catechins to theaflavins, fermenting the reaction mixture, and recovering the product from the reaction mixture. Experiments 6, 7 and 9 in Examples 2 and 3 of WO 2008/065007 A each disclose fermenting a mixture of epicatechin and tea leaf.

### Summary of the Invention

According to the present invention there is provided a process for preparing a theaflavin-enhanced tea product including a step of subjecting a tea-source to enzymatic fermentation in the presence of added exogenous epicatechin and wherein the processes of Experiments 6, 7 and 9 of WO 2008/065007 A have been excluded by means of a disclaimer.

Preferably, the enzymatic fermentation according to the present invention is by means of endogenous enzymes in the tea-source.

According to one of the preferred aspects of the invention, the amount of said epicatechin is 35 to 750, more preferably 75 to 520, most preferably 120-260 mg per gram dry weight of soluble solids in said tea-source. According to a preferred aspect, epicatechin is added prior to the fermentation of the tea-source.

The tea-source is preferably treated with tannase prior to or during the fermentation.

According to a preferred aspect, the fermentation is in the presence of added water. The amount of added water is preferably 0.1-500 gram per gram of soluble solids in the tea source.

### Definitions

The term "tea-source" as used herein refers to any material obtained from the plant *Camellia sinensis* or *Camellia assamica* or derived therefrom after processing such a plant material.

The term "tea product" as used herein means any product derived from a tea-source. It includes, but is not limited to black tea, oolong tea, instant tea and green tea. It also includes slurry comprising mixture of a tea product with water.

The term "theaflavin-enhanced" as used herein refers to a tea product with enhanced level of total theaflavins including TF1, TF2, TF3 and TF4 as compared to the tea source. In particular, the tea product will usually have a higher amount of theaflavins per gram dry weight of soluble solids in the tea product than the amount of theaflavins per gram dry weight of soluble solids in the tea source.

The term "tea leaves" as used herein includes tea leaves, buds and other parts of the plant *Camellia sinensis* or *Camellia assamica.*

The term "dhool" as used herein means macerated tea leaves. Tea leaves may be macerated by commonly used methods such as rolling, crush tear curl (CTC), blending using a kitchen blender etc.

The term enzymatic fermentation as used herein means oxidative biotransformations mediated by enzymes. Fermentation can be by means of enzymes endogenous in the tea-source and capable of enzymatic fermentation. Nonlimiting examples of such a tea-source include tea leaves and dhool. Fermentation can also be by means of exogenous enzyme and corresponding co-substrate.

The term "substantially deactivated endogenous enzymes" refers to a tea-source subjected to a step of deactivation of enzymes endogenously present within the tea-source. Typically, deactivation is thermal i.e. by subjecting to a step of exposure to a temperature greater than 100°C, also known as firing. Examples of tea-sources with substantially deactivated endogenous enzymes include instant tea and green tea.

The term "soluble solids in a tea-source" as used herein means the amount of solids obtained by (a) contacting a tea-source with water at 90° C for 1 hour, (b) separating the liquor from insoluble solids by centrifuge/filtration

(Whatman 541 filter) and (c) evaporating water from the liquor to obtain soluble solids.

The term "dry weight basis" as used herein refers to a ratio or weight % of a composition expressed on moisture-free basis. The term "fresh weight basis" as used herein refers to a composition expressed as % wt of a material including moisture. Typically tea leaves contain about 70% moisture and about 30% solids. Of the total solids, soluble solids are usually about 40% by weight (on dry weight basis). Thus ~12% soluble solids on fresh weight basis is equivalent to ~40% soluble solids on dry weight basis. It should be noted that typical figures given above are representative and actual figures may vary somewhat depending on geographical origin, species of tea and humidity.

The term "slurry fermentation" as used herein means fermentation of a tea-source where the ratio of added water to the tea-source is greater than 2:1 on fresh weight basis or 6.7:1 on dry weight basis and 17:1 on soluble solids basis.

The term "solid state fermentation" as used herein means enzymatic fermentation of a tea-source where the ratio of added water to the tea-source is less than 2:1 on fresh weight basis or 6.7:1 on dry weight basis and 17:1 on soluble solids basis. Typically the ratio of added water to the tea-source is less than 2:1 on soluble solids basis.

The term "exogenous epicatechin" as used herein refers to epicatechin that is externally added to the tea-source and excludes any epicatechin that may be present in the tea-source.

Enzyme activity is expressed as activity units or simply units. Tannase activity units are quoted from supplier's data. For exogenous enzymes like polyphenol oxidase (PPO) and Peroxidase (POD), the enzyme activity can be determined as follows

### Assay for polyphenol oxidase (PPO)

PPO is assayed spectrophotometerically using (+)-catechin as the substrate. The assay is performed with a reaction volume of 3 mL containing 3 mM catechin in 0.1 M phosphate citrate buffer pH 5.5. A 150 µL aliquot of a freshly prepared 60 mM catechin stock solution in water (70% v/v) - ethanol (30% v/v) mixture is used to obtain a catechin concentration of 3 mM in the reaction mixture. Enzyme solution of appropriate dilution is added to initiate reaction and the mixture is incubated at 40°C for 10-20 min. The reaction is stopped using 200 µL of a solution comprised of acetonitrile (60% v/v), acetic acid (10% v/v) and water (30% v/v). The absorbance at 400 nm is then recorded and the activity calculated based on the relationship: activity of 1 unit = absorbance increase of 0.001.

### Assay for peroxidise (POD)

The assay for POD is identical to that for PPO except that the reaction mixture also contains 7.3 mM of hydrogen peroxide. The requisite amount of hydrogen peroxide is delivered using a 1.5% w/v stock solution. The reaction mixture is incubated for 10-20 min at 30°C. The reaction is then terminated as described above and the absorbance at 400 nm is determined. The activity was again calculated based on the relationship: activity of 1 unit = absorbance increase of 0.001.

### Detailed Description of the Invention

According to the present invention there is provided a process for preparing a theaflavin-enhanced tea product including a step of subjecting a tea-source to enzymatic fermentation in the presence of added exogenous epicatechin.

Preferably, the enzymatic fermentation according to the present invention is by means of endogenous enzymes in the tea-source capable of carrying out the fermentation.

Commercially available exogenous epicatechin (e.g. from Sigma, Herbs-Tech etc) can be added. Other sources of exogenous epicatechin that can be added according to the present invention include epicatechin-rich extracts of other plant materials such as cocoa, grape juice etc.

The process according to the present invention can be in the presence of other exogenous catechins (including epicatechin gallate, epigallactocatechin and epigallactocatechin gallate) added along with exogenous epicatechin. Preferably, the ratio of exogenous epicatechin to total exogenous catechins is greater than the ratio of endogenous epicatechin to total endogenous catechins in the tea-source. Preferred amount of exogenous epicatechin that is added is selected such the molar ratio of total epigallocatechin to total epicatechin is from 1:1 to 1:16, preferably from 1:1.5 to 1:10, more preferably from 1:2 to 1:9.

According to one of the preferred aspect of the invention, the amount of the added epicatechin is 35 to 750, preferably 75 to 520, more preferably 120 to 260 mg per gram dry weight of soluble solids in the tea-source.

According to a preferred aspect, when the tea source is tea leaves, epicatechin is added to the tea leaves after plucking. According to an alternative preferred aspect, the epicatechin is added to the tea leaves prior to plucking.

It is preferred that the tea source is substantially unfermented, i.e., it has not been previously subjected to a step of enzymatic fermentation. In particular, it is preferred that the weight ratio of total catechins to theaflavins in said tea-source is greater than 10, preferably greater than 20, more preferably from 50 to 10000. Alternatively or additionally, the tea source preferably has no more than 10 mg, more preferably 5 mg, most preferably 2 mg theaflavin per g of dry weight of soluble solids. It is particularly preferred that the tea-source is substantially devoid of theaflavins.

The process according to the present invention preferably includes a step of treating the tea-source with tannase prior to or during said fermentation.

According to a preferred aspect, the step of treating the tea-source with tannase is prior to the fermentation. The treatment with tannase is preferably carried out in an atmosphere of nitrogen (to prevent fermentation) at a suitable temperature and for a suitable time. Suitable conditions can be determined by experiment. According to an alternate preferred aspect, the step of treating the tea-source with tannase is during fermentation. It is preferred that the amount of the tannase is 0.08 to 8, more preferably 0.2 to 4, most preferably 0.4 to 2 mg per gram dry weight of the soluble solids in the tea-source.

According to a preferred aspect, the fermentation is in the presence of added water. The amount of added water is preferably 0.1 to 500 gram per gram of soluble solids in the tea source. In one of the preferred aspect, the amount of added water is 0.1 to 17, more preferably 0.1 to 10, most preferably 0.1 to 2 gram per gram of soluble solids in the tea-source leading to solid state fermentation. According to an alternate preferred aspect, the amount of added water is 17 to 500, more preferably 20 to 400, most preferably 25 to 200 gram per gram of soluble solids in the tea-source, leading to slurry fermentation.

According to a preferred, aspect, the tea-source is tea leaves including endogenous enzymes capable of enzymatic fermentation and the process includes the steps of:
(a) withering of the tea leaves;
(b) macerating the withered leaves;
(c) subjecting the macerated tea leaves to enzymatic fermentation in presence of added exogenous epicatechin; and
(d) firing, preferably to a temperature of about 120°C, to obtain a theaflavin-enhanced black tea.

The process listed above preferably includes a step of treating the tea-source with tannase prior to or during the step (c), i.e. enzymatic fermentation.

According to another preferred aspect, the tea-source is tea leaves including endogenous enzymes capable of enzymatic fermentation and said process includes the steps of:
(a) withering of said tea leaves;
(b) macerating of the withered leaves and adding to the macerated tea-leaves 17 to 500 gram water per gram of soluble solids to prepare a slurry;
(c) subjecting the slurry to enzymatic fermentation in presence of added exogenous epicatechin to obtain theaflavin-enhanced slurry.

The process listed above preferably includes a step of treating the tea-source with tannase prior to or during the step (c), i.e. enzymatic fermentation.

Theaflavin-enhanced slurry can be preferably dried to reduce moisture content to less than 5% to obtain theaflavin-enhanced black tea. In another preferred aspect, insoluble solids are separated from the theaflavin-enhanced slurry to obtain theaflavin-rich solution. The theaflavin-rich solution may be preferably dried to get theaflavin-enhanced tea product, which may, for example, be added to black tea, green tea, oolong tea, or instant tea. According to an alternate preferred aspect, the theaflavin-rich solution can be coated on black tea, green tea or oolong tea and dried to obtain theaflavin-enhanced tea.

According to another preferred aspect, the enzymatic fermentation is by means of an exogenous enzyme and a co-substrate. The fermentation by means of an exogenous enzyme and a co-substrate is preferred when the tea-source has substantially deactivated endogenous enzymes. Examples of tea-source with substantially deactivated endogenous enzymes are green tea or instant green tea. Slurry fermentation is preferred when the tea-source has substantially deactivated endogenous enzymes.

A suitable combination of an exogenous enzyme and corresponding co-substrate is chosen such that the combination is capable of the fermentation of the tea-source.

According to a preferred aspect, the exogenous enzyme is polyphenol oxidase and the corresponding co-substrate is oxygen. According to a further preferred aspect, the amount of said polyphenol oxidase is 1.5×10⁴ to 1.5×10⁷, more preferably 3.5×10⁹ to 1.5×10⁶, most preferably 7.5×10⁴ to 7.5×10⁵ units per gram dry weight of soluble solids in said tea-source. Polyphenol oxidase can be commercially obtained, e.g. from Worthington or can be extracted and purified from suitable plant material.

According to another preferred aspect, the exogenous enzyme is peroxidase and the co-substrate is hydrogen peroxide. Peroxidase can be obtained from commercial sources such as Sigma or can be extracted and purified from suitable plant material. According to a further preferred aspect, the amount of said peroxidase is 1.5×10⁴ to 1.5×10⁷, more preferably 3.5×10⁴ to 1.5×10⁶, most preferably 7.5×10⁴ to 7.5×10⁵ units per gram dry weight of soluble solids in said tea-source.

It is preferred that the amount of said hydrogen peroxide is 7 to 700 mg, more preferably 15 to 300 mg, most preferably 35 to 100 mg per gram dry weight of soluble solids in said tea-source.

According to a preferred aspect, the tea-source is green tea or instant green tea and the process includes the steps of:
(a) adding 17 to 500 gram water per gram of soluble solids to the tea-source to prepare a slurry;
(b) subjecting the slurry to enzymatic fermentation by adding an exogenous enzyme and a co-substrate, in presence of added exogenous epicatechin, to obtain theaflavin-enhanced slurry.

The process listed above preferably includes a step of treating the tea-source with tannase prior to or during the step (b), i.e. enzymatic fermentation.

Theaflavin-enhanced slurry can be preferably dried to reduce the moisture content to less than 5% (by weight) to obtain theaflavin-enhanced black tea. In another preferred aspect, insoluble solids are separated from the theaflavin-enhanced slurry to obtain theaflavin-rich solution. The theaflavin-rich solution may be preferably dried to get theaflavin-enhanced tea product, which may, for example, be added to black tea, green tea, oolong tea, or instant tea. According to an alternate preferred aspect, the theaflavin-rich solution can be coated on black tea and dried to obtain theaflavin-enhanced black tea.

According to another preferred aspect, the theaflavin-enhanced slurry obtained in the above process is coated on black tea to obtain theaflavin-enhanced black tea.

According to another preferred aspect, the theaflavin-enhanced slurry is coated on instant tea to obtain theaflavin-enhanced instant tea.

### Examples

The invention will now be described with reference to specific examples. The following examples are presented by way of illustration only and they do not limit the scope of the invention in any way.

### Materials and Methods

Table 1 gives a list of materials used in examples.

**Table 1: Materials used**

| **Ingredient** | **Form of ingredient** | **Source and geographical origin of ingredient** |
|---|---|---|
| Tea leaves | Frozen (stored at -80°C) | South Indian tea gardens |
| Dhool | Prepared from the frozen tea leaves by immersing the leaf in liquid nitrogen and then blending it in a kitchen blender. | |
| Epicatechin | | Sigma Aldrich |
| Tannase KT-50 | Stock solution of 1 g/L | Kikkoman, Japan |

### Method of analysis of theaflavins

### Extraction of theaflavins

The total theaflavin level was determined using an aqueous methanolic extract.

The samples from solid state fermentation were extracted using 70% methanol extraction at ~80°C for 10 min at the high aqueous methanolic solution to dhool ratio of 16.7:1 on fresh weight basis. A sample of the extract was diluted 1:1 using a solution comprised of 90% v/v water, 10% v/v acetonitrile, 0.5 g/L ascorbic acid and 0.5 g/L ethylenediamine tetraacetic acid (EDTA) to prevent oxidation of theaflavins and catechins.

For the slurry fermentation system this extract was prepared by adding requisite amount of 100% methanol to the aqueous slurry to obtain the composition 70% methanol and 30% water. The amount of methanol added was 2.33 fold the volume of water present therefore the extraction is performed at aqueous methanolic solution to dhool ratio of 16.7:1 on fresh weight basis or ~55.7:1 on dry weight basis. At this high ratio of 70% methanol to dhool quantitative extraction of theaflavin is obtained at ~80°C with extraction time of 10 min.

### Analysis of theaflavins

The samples were stored at -80°C and theaflavins were analysed using high performance liquid chromatography (HPLC) with diode array detection.

The theaflavins were analysed by HPLC (Shimadzu) using an octadecylsilica (C18) column (Nova-pak ex. Waters, 3.9 mm i.d.x 150 mm) with detection at 380 nm, column temperature of 40°C, injection volume of 20 µL and flow rate of 1 mL/min. The mobile phases for theaflavin analysis were 2% (v/v) acetic acid in water (mobile phase A) and acetonitirile (mobile phase B). A gradient from 8% B to 69 % B over 50 min was used to separate the theaflavins following which the column was equilibrated with 8% buffer A for 5 min. Commercially available high purity theaflavins were used as standards for quantification.

### Solid state fermentation

The solid state fermentation was performed at room temperature (~25°C) by spreading of 5 g of dhool on a flat surface exposed to atmosphere. The fermentation time was 90-120 min. When solid state fermentation was performed with tannase, the tannase dosage was 1.67 mg per gram soluble solids in the tea-source. Water containing the requisite amount of epicatechin, or epicatechin and tannase was added to the dhool at the ratio of 1.7:1 (on soluble solids basis).

The amounts of epicatechin and tannase added in solid state fermentation are given in Table 2 for various examples.

**Table 2: Examples of solid state fermentation**

| **Example** | **Epicatechin (mg per gram soluble solids in dhool)** | **Tannase (mg per gram soluble solids in dhool)** |
|---|---|---|
| Comparative example A | 0 | 0 |
| 1 | 35 | 0 |
| 2 | 118 | 0 |
| 3 | 258 | 0 |
| | | |
| Comparative example B1 | 0 | 0 |
| Comparative example B2 | 0 | 1.67 |
| 4 | 35 | 1.67 |
| 5 | 118 | 1.67 |
| 6 | 258 | 1.67 |
| 7 | 518 | 1.67 |

Examples 1-7 are examples of processes according to the present invention whilst Comparative examples A, B1 and B2 are outside the scope of invention.

### Slurry Fermentation

The slurry fermentation was performed in shake-flasks using an orbital shaker at 190-200 rpm at 30°C. 5 g (fresh weight) of dhool was used for the fermentation experiment with the water to soluble solids ratio of 41.7:1 (or 5:1 on fresh weight basis). The required amount of epicatechin was added to the slurry prior to fermentation. The fermentation time was 90 min. When slurry fermentation was performed with added tannase (activity of 50,000 tannase activity units per gram, ex. Kikkoman), tannase was dosed at 0.83 mg/g soluble solids basis using a stock solution of 1 g/L.

The amount of epicatechin and tannase added in slurry fermentation are given in Table 3 for various examples.

**Table 3: Examples of slurry fermentation**

| **Example** | **Epicatechin (mg per gram soluble solids in dhool)** | **Tannase (mg per gram soluble solids in dhool)** |
|---|---|---|
| Comparative example C | 0 | 0 |
| 8 | 35 | 0 |
| 9 | 118 | 0 |
| 10 | 258 | 0 |
| 11 | 518 | 0 |
| Comparative example D1 | 0 | 0 |
| Comparative example D2 | 0 | 0.83 |
| 12 | 35 | 0.83 |
| 13 | 118 | 0.83 |
| 14 | 258 | 0.83 |
| 15 | 518 | 0.83 |

Examples 8-15 are examples of processes according to the present invention whilst Comparative example C, D1 and D2 are outside the scope of invention.

### Results

Total theaflavins were analyzed for tea products of all the examples and the results are given in Table 4 for solid state fermentation and Table 5 for slurry fermentation.

**Table 4: Total theaflavins in solid state fermentation**

| **Example** | **Total theaflavins in tea product (weight % on dry weight basis)** |
|---|---|
| Comparative example A | 1.3 |
| 1 | 1.8 |
| 2 | 2.4 |
| 3 | 1.9 |
| Comparative example B1 | 1.9 |
| Comparative example B2 | 3.1 |
| 4 | 4.3 |
| 5 | 4.0 |
| 6 | 4.9 |
| 7 | 5.2 |

It is clear from the above that tea products of Examples 1-4 prepared by a process including step of enzymatic fermentation in presence of exogenous epicatechin have enhanced levels of theaflavins as compared to tea product of Comparative Example A.

Similarly, tea products of Examples 5-8 prepared by a process including step of enzymatic fermentation in presence of exogenous epicatechin and tannase have enhanced levels of theaflavins as compared to tea products of Comparative Examples B1 and B2.

**Table 5: Total theaflavins in slurry fermentation**

| **Example** | **Total theaflavins in tea product (weight % on dry weight basis)** |
|---|---|
| Comparative example C | 1.9 |
| 8 | 2.0 |
| 9 | 2.6 |
| 10 | 3.1 |
| 11 | 2.9 |
| Comparative example D1 | 1.9 |
| Comparative example D2 | 3.7 |
| 12 | 5.1 |
| 13 | 6.4 |
| 14 | 6.0 |
| 15 | 6.4 |

It is clear from the above that tea products of Examples 8-11 prepared by a process including step of enzymatic fermentation in presence of exogenous epicatechin and externally added water have enhanced levels of theaflavins as compared to tea product of Comparative Example C.

Similarly, tea products of Examples 12-15 prepared by a process including step of enzymatic fermentation in presence of exogenous epicatechin, tannase and externally added water have enhanced levels of theaflavins as compared to tea products of Comparative Examples D1 and D2.

It is also clear from all the examples above that theaflavin levels increase with the increase in the level of epicatechin up to about 300 mg/g epicatechin per dry weight of dhool. With further increase in epicatechin levels to about 500 mg/g dry weight of dhool, the trend indicates either a plateau or reduction in theaflavin levels. It is therefore envisaged that incorporation of epicatechin at levels beyond 750 mg per g dry weight of dhool is unlikely to offer further enhancement of theaflavin or be economically viable.

Thus, according to the present invention, it has been possible to prepare theaflavin-enhanced tea products using solid-state as well as slurry fermentation by carrying out enzymatic fermentation in presence of exogenous epicatechin, either in presence or absence of tannase.

## Claims

1. A process for preparing a theaflavin-enhanced tea product including a step of subjecting a tea-source to enzymatic fermentation in the presence of added exogenous epicatechin, with the proviso that the process does not comprise:
- mixing 0.6 g of epicatechin dissolved in 750 ml deionised water with 30 g of frozen tea leaf in a reactor to form a fermenting reaction mixture, adding 10 g aliquots of frozen leaf to the fermenting reaction mixture every 2 minutes for 24 minutes, and then continuing fermentation for 180 minutes; or
- mixing 0.6 g of epicatechin dissolved in 750 ml deionised water with 150 g of frozen tea leaf in a reactor to form a fermenting reaction mixture, and then continuing fermentation for 180 minutes; or
- mixing 1.2 g of epicatechin dissolved in 750 ml deionised water with 30 g of frozen leaf to form a fermenting reaction mixture, adding 10 g aliquots of frozen tea leaf to the fermenting reaction mixture every 2 minutes for 24 minutes, continuing fermentation for 60 minutes and then drying the reaction mixture to a moisture content of <5% to produce a leaf tea product;
wherein the frozen leaf is provided by a method wherein tea leaf from Kenya Clone 35 is withered in trays at an air temperature of 20°C for 18 hours from a moisture content of 76.8% to 70.8% by weight, before being macerated using a vegetable cutter and three passes through a CTC machine, and then being rapidly frozen in a blast freezer such that the time from first cut of the leaf to freezing is less than 15 minutes; and
wherein the reactor is a tank reactor comprising a cylindrical tank having a radius of 13 cm and a height of 22 cm, wherein air is pumped into the bottom of the reactor through an inlet tube of a ring sparger of radius 4.5 cm, the sparger having 11 holes on top and 2 on the bottom and being arranged concentrically with the tank in order to avoid contact of gas bubbles with the sides of the vessel, there being positioned directly above the sparger a downward-pumping turbine agitator having a sweeping a radius of 9 cm rotating in-use at 600 rpm, wherein four baffles each extending radially inwards for about 10% of the diameter of the reactor are arranged around the interior of the tank in order to control the circulation pattern of the stirred reaction mixture, wherein a port in the top of the reactor allows for addition of reactants and/or removal of product, wherein the whole reactor is in a water bath to control the temperature at 20-25°C, and wherein the oxygen concentration is 60-100% of the air-saturated concentration.

2. A process as claimed in claim 1 wherein amount of said epicatechin is from 35 to 750 mg per gram dry weight of soluble solids in said tea-source.

3. A process as claimed in claims 1 or 2 including a step of treating the tea-source with tannase prior to or during said fermentation.

4. A process as claimed in claim 3, wherein amount of said tannase is from 0.08 to 8 mg per gram dry weight of said soluble solids.

5. A process as claimed in any one of the preceding claims wherein said fermentation is in the presence of added water.

6. A process as claimed in claim 5 wherein amount of said water is 0.1 to 500 gram per gram dry weight of soluble solids in said tea-source.

7. A process as claimed in any one of the preceding claims wherein said tea-source is tea leaves including endogenous enzymes capable of said enzymatic fermentation and said process includes the steps of:
(a) withering of said tea leaves;
(b) macerating the withered leaves;
(c) subjecting the macerated tea leaves to enzymatic fermentation in presence of added exogenous epicatechin; and
(d) firing to obtain a theaflavin-enhanced black tea.

8. A process as claimed in any one of the preceding claims wherein said tea-source is tea leaves including endogenous enzymes capable of enzymatic fermentation and said process includes the steps of:
(a) withering of said tea leaves;
(b) macerating the withered leaves and adding to the macerated tea-leaves 17 to 500 gram water per gram of soluble solids to prepare a slurry;
(c) subjecting the slurry to enzymatic fermentation in presence of added exogenous epicatechin to obtain theaflavin-enhanced slurry.

9. A process as claimed in any one of the preceding claims wherein said fermentation is carried out by adding exogenous enzyme and a co-substrate.

10. A process as claimed in claim 9 wherein said tea-source has substantially deactivated endogenous enzymes.

11. A process as claimed in claim 9 or 10 wherein said exogenous enzyme is polyphenol oxidase and said co-substrate is oxygen.

12. A process as claimed in claim 9 or 10 wherein said exogenous enzyme is peroxidase and said co-substrate is hydrogen peroxide.

13. A process as claimed in any one of claims 9 to 12 wherein said tea-source is green tea or instant tea and said process includes the steps of:
(a) adding 17 to 500 gram water per gram of soluble solids to the tea-source to prepare a slurry;
(b) subjecting the slurry to enzymatic fermentation by adding an exogenous enzyme and a co-substrate, in presence of added exogenous epicatechin, to obtain theaflavin-enhanced slurry.

14. A process as claimed in any one of the preceding claims wherein the weight ratio of total catechins to theaflavins in said tea-source is greater than 10.

15. A process as claimed in any one of the preceding claims wherein said tea-source has no more than 10 mg theaflavins per g of dry weight of soluble solids.

## Patentansprüche

1. Verfahren zur Herstellung eines mit Theaflavin angereichten Tee-Produkts, das einen Schritt des Unterwerfens einer Tee-Quelle einer enzymatischen Fermentation in Gegenwart von zugesetztem exogenem Epicatechin umfasst, mit der Maßgabe, dass das Verfahren nicht umfasst:
- Mischen von 0,6 g Epicatechin, gelöst in 750 ml entionisiertem Wasser, mit 30 g gefrorenen Tee-Blättern in einem Reaktor unter Bildung eines Fermentierungsreaktionsgemisches, Zugeben von 10 g-Aliquots von gefrorenen Teeblättern alle 2 Minuten für 24 Minuten zu dem Fermentierungsreaktionsgemisch und danach Fortsetzen der Fermentation für 180 Minuten oder
- Mischen von 0,6 g Epicatechin, gelöst in 750 ml entionisiertem Wasser, mit 150 g gefrorenen Tee-Blättern in einem Reaktor unter Bildung eines Fermentierungsreaktionsgemisches und danach Fortsetzen der Fermentation für 180 Minuten oder
- Mischen von 1,2 g Epicatechin, gelöst in 750 ml entionisiertem Wasser, mit 30 g gefrorenen Blättern unter Bildung eines Fermentierungsreaktionsgemisches, Zugeben von 10 g-Aliquots von gefrorenen Tee-Blättern alle 2 Minuten für 24 Minuten zu dem Fermentierungsreaktionsgemisch, Fortsetzen der Fermentation für 60 Minuten und danach Trocknen des Reaktionsgemisches zu einem Feuchtigkeitsgehalt von <5 %, um ein Blatttee-Produkt zu produzieren;
wobei die gefrorenen Blätter durch ein Verfahren bereitgestellt werden, indem Tee-Blätter von Kenya Clone 35 in Gestellen bei einer Lufttemperatur von 20 °C für 18 Stunden von einem Feuchtigkeitsgehalt von 76,8 Gewichts-% auf 70,8 Gewichts-% welken gelassen werden, bevor sie unter Verwendung eines Gemüseschneiders und drei Passagen durch eine CTC-Maschine mazeriert werden und dann in einem Gebläsekühler schnell gefroren werden, so dass die Zeit vom ersten Schnitt der Blätter zum Gefrieren weniger als 15 Minuten beträgt; und
wobei der Reaktor ein Tankreaktor ist, der einen zylindrischen Tank mit einem Radius von 13 cm und einer Höhe von 22 cm umfasst, wobei Luft in den Boden des Reaktors durch ein Einlassrohr einer Ring-Sprühvorrichtung mit einem Radius von 4,5 cm gepumpt wird, wobei die Sprühvorrichtung 11 Löcher oben und 2 am Boden hat und konzentrisch mit dem Tank angeordnet ist, um einen Kontakt von Gasblasen mit den Seiten des Behälters zu vermeiden, wobei es direkt über der Sprühvorrichtung einen nach unten pumpenden Turbinenrührer positioniert gibt, der einen Sweeping-Radius von 9 cm hat, sich bei Verwendung mit 600 Upm dreht, wobei vier Leitplatten, die sich jeweils radial nach innen über etwa 10 % des Durchmessers des Reaktors erstrecken, um das Innere des Tanks angeordnet sind, um das Zirkulationsmuster des gerührten Reaktionsgemisches zu steuern, wobei eine Öffnung in oberen Teil des Reaktors für einen Zusatz von Reaktanten und/oder eine Entfernung von Produkt sorgt, wobei der ganze Reaktor in einem Wasserbad ist, um die Temperatur bei 20-25 °C zu steuern und wobei die Sauerstoffkonzentration 60-100 % der Luft-Sättigungskonzentration ist.

2. Verfahren nach Anspruch 1, wobei die Menge des Epicatechins von 35 bis 750 mg pro Gramm Trockengewicht der löslichen Feststoffe in der Tee-Quelle ist.

3. Verfahren nach Anspruch 1 oder 2, das einen Schritt der Behandlung der Tee-Quelle mit Tannase vor oder während der Fermentation umfasst.

4. Verfahren nach Anspruch 3, wobei die Menge der Tannase 0,08 bis 8 mg pro Gramm Trockengewicht der löslichen Feststoffe ist.

5. Verfahren nach einem der vorangehenden Ansprüche, wobei die Fermentation in Gegenwart von zugesetztem Wasser ist.

6. Verfahren nach Anspruch 5, wobei die Menge an Wasser 0,1 bis 500 Gramm pro Gramm Trockengewicht an löslichen Feststoffen in der Tee-Quelle ist.

7. Verfahren nach einem der vorangehenden Ansprüche, wobei die Tee-Quelle Tee-Blätter sind, die endogene Enzyme enthalten, die für die enzymatische Fermentation geeignet sind, und wobei das Verfahren die folgenden Schritte umfasst:
(a) Welkenlassen der Tee-Blätter;
(b) Mazerieren der gewelkten Blätter;
(c) Unterwerfen der mazerierten Tee-Blätter einer enzymatischen Fermentation in Gegenwart von zugesetztem exogenem Epicatechin und
(d) Feuern unter Erhalt eines mit Theaflavin angereicherten schwarzen Tees.

8. Verfahren nach einem der vorangehenden Ansprüche, wobei die Tee-Quelle Tee-Blätter ist, die endogene Enzyme enthalten, die für die enzymatische Fermentation geeignet sind, und wobei das Verfahren die folgenden Schritte umfasst:
(a) Welkenlassen der Tee-Blätter;
(b) Mazerieren der gewelkten Blätter und Zusetzen zu den mazerierten Tee-Blättern 17 bis 500 Gramm Wasser pro Gramm löslicher Feststoffe, um eine Aufschlämmung herzustellen;
(c) Unterwerfen der Aufschlämmung einer enzymatischen Fermentation in Gegenwart von zugesetztem exogenem Epicatechin unter Erhalt einer mit Theaflavin angereicherten Aufschlämmung.

9. Verfahren nach einem der vorangehenden Ansprüche, wobei die Fermentation durch Zusetzen von exogenem Enzym und einem Co-Substrat durchgeführt wird.

10. Verfahren nach Anspruch 9, wobei die Tee-Quelle im Wesentlichen deaktivierte endogene Enzyme hat.

11. Verfahren nach Anspruch 9 oder 10, wobei das exogene Enzym Polyphenoloxidase ist und das Co-Substrat Sauerstoff ist.

12. Verfahren nach Anspruch 9 oder 10, wobei das exogene Enzym Peroxidase ist und das Co-Substrat Wasserstoffperoxid ist.

13. Verfahren nach einem der Ansprüche 9 bis 12, wobei die Tee-Quelle grüner Tee oder Instant-Tee ist und das Verfahren die folgenden Schritte umfasst:
(a) Zugeben von 17 bis 500 Gramm Wasser pro Gramm löslicher Feststoffe zu der Tee-Quelle, um eine Aufschlämmung herzustellen;
(b) Unterwerfen der Aufschlämmung einer enzymatischen Fermentation durch Zusetzen eines exogenen Enzyms und eines Co-Substrats in Gegenwart von zugesetztem exogenem Epicatechin, um eine mit Theaflavin angereicherte Aufschlämmung zu erhalten.

14. Verfahren nach einem der vorangehenden Ansprüche, wobei das Gewichtsverhältnis von Gesamt-Catechinen zu Theaflavinen in der Tee-Quelle größer als 10 ist.

15. Verfahren nach einem der vorangehenden Ansprüche, wobei die Tee-Quelle nicht mehr als 10 mg Theaflavine pro g Trockengewicht an löslichen Feststoffen hat.

## Revendications

1. Procédé de préparation d'un produit de thé enrichi en théaflavines comprenant une étape consistant à soumettre une source de thé à une fermentation enzymatique en présence d'une épicatéchine exogène ajoutée, à condition que le procédé ne comprenne pas :
- le mélange de 0,6 g d'épicatéchine dissoute dans 750 ml d'eau déminéralisée avec 30 g de feuilles de thé congelées dans un réacteur pour former un mélange réactionnel de fermentation, l'ajout d'aliquotes de 10 g de feuilles congelées au mélange réactionnel de fermentation toutes les 2 minutes pendant 24 minutes, puis la poursuite de la fermentation pendant 180 minutes ; ou
- le mélange de 0,6 g d'épicatéchine dissoute dans 750 ml d'eau déminéralisée avec 150 g de feuilles de thé congelées dans un réacteur pour former un mélange réactionnel de fermentation, puis la poursuite de la fermentation pendant 180 minutes ; ou
- le mélange de 1,2 g d'épicatéchine dissoute dans 750 ml d'eau déminéralisée avec 30 g de feuilles congelées pour former un mélange réactionnel de fermentation, l'ajout d'aliquotes de 10 g de feuilles de thé congelées au mélange réactionnel de fermentation toutes les 2 minutes pendant 24 minutes, la poursuite de la fermentation pendant 60 minutes, puis le séchage du mélange réactionnel jusqu'à une teneur d'humidité < 5 % pour obtenir un produit de feuilles de thé ;
- dans lequel les feuilles congelées sont obtenues par un procédé dans lequel des feuilles de thé provenant du Clone 35 du Kenya sont flétries sur des plateaux à une température d'air de 20°C pendant 18 heures pour faire passer leur teneur d'humidité de 76,8 % à 70,8 % en poids, avant macération en utilisant un coupe-légumes et trois passages dans une machine de conditionnement CTC, puis congélation rapide dans un congélateur à air forcé pour que le temps entre la première coupe de la feuille et la congélation soit inférieur à 15 minutes ; et
- dans lequel le réacteur est un réacteur à cuve et comprend : une cuve cylindrique d'un rayon de 13 cm et d'une hauteur de 22 cm, l'air étant aspiré par pompage dans le bas du réacteur par l'intermédiaire d'un tube d'admission d'un disperseur annulaire d'un rayon de 4,5 cm, le disperseur comportant 11 trous sur le dessus et 2, en dessous et étant disposé concentriquement par rapport à la cuve pour éviter tout contact des bulles de gaz avec les parois du réacteur ; et positionné immédiatement au-dessus du disperseur, un agitateur à turbine du type axial ayant un rayon de balayage de 9 cm quand il est en rotation à 600 tours/minute ; dans lequel quatre chicanes qui s'étendent chacune radialement vers l'intérieur sur environ 10 % du diamètre du réacteur sont disposées sur la circonférence intérieure de la cuve pour contrôler le trajet de circulation du mélange réactionnel sous agitation ; dans lequel un orifice dans la partie haute du réacteur qui permet d'ajouter les réactifs et/ou de retirer le produit, dans lequel l'ensemble du réacteur est dans un bain d'eau pour réguler la température à 20-25°C, et dans lequel la concentration d'oxygène est de 60 à 100 % de la concentration de saturation de l'air.

2. Procédé selon la revendication 1, dans lequel la quantité de ladite épicatéchine est de 35 à 750 mg par gramme en poids sec de solides solubles dans ladite source de thé.

3. Procédé selon les revendications 1 ou 2 comprenant une étape de traitement de la source de thé avec une tannase avant ou pendant ladite fermentation.

4. Procédé selon la revendication 3, dans lequel la quantité de ladite tannase est de 0,08 à 8 mg par gramme en poids sec desdits solides solubles.

5. Procédé selon l'une quelconque des revendications précédentes, dans lequel ladite fermentation s'opère en présence d'eau ajoutée.

6. Procédé selon la revendication 5, dans lequel la quantité de ladite eau est de 0,1 à 500 grammes par gramme en poids sec de solides solubles dans ladite source de thé.

7. Procédé selon l'une quelconque des revendications précédentes, dans lequel la source de thé est des feuilles de thé contenant des enzymes endogènes capables de ladite fermentation enzymatique et ledit procédé comprend les étapes suivantes :
(a) flétrissement desdites feuilles de thé ;
(b) macération des feuilles flétries ;
(c) soumission des feuilles de thé ayant macéré à une fermentation enzymatique en présence d'une épicatéchine exogène ajoutée ; et
(d) cuisson pour obtenir un thé noir enrichi en théaflavines.

8. Procédé selon l'une quelconque des revendications précédentes, dans lequel ladite source de thé est des feuilles de thé contenant des enzymes endogènes capables de fermentation enzymatique et ledit procédé comprend les étapes suivante
(a) flétrissement desdites feuilles de thé ;
(b) macération des feuilles flétries et ajout aux feuilles de thé ayant macéré de 17 à 500 grammes d'eau par gramme de solides solubles pour préparer une suspension épaisse ;
(c) soumission de la suspension épaisse à une fermentation enzymatique en présence d'une épicatéchine exogène ajoutée pour obtenir une suspension épaisse enrichie en théaflavines.

9. Procédé selon l'une quelconque des revendications précédentes, dans lequel ladite fermentation est mise en oeuvre par ajout d'une enzyme exogène et d'un co-substrat.

10. Procédé selon la revendication 9, dans lequel ladite source de thé contient des enzymes endogènes essentiellement désactivées.

11. Procédé selon les revendications 9 ou 10, dans lequel ladite enzyme exogène est une polyphénol oxydase et ledit co-substrat est l'oxygène.

12. Procédé selon les revendications 9 ou 10, dans lequel ladite enzyme exogène est une peroxydase et ledit co-substrat est le peroxyde d'hydrogène.

13. Procédé selon l'une quelconque des revendications 9 à 12, dans lequel ladite source de thé est le thé vert ou un thé instantané et ledit procédé comprend les étapes suivantes :
(a) ajout de 17 à 500 g d'eau par gramme de solides solubles à la source de thé pour préparer une suspension épaisse ;
(b) soumission de la suspension épaisse à une fermentation enzymatique par ajout d'une enzyme exogène et d'un co-substrat, en présence d'une épicatéchine exogène ajoutée, pour obtenir une suspension épaisse enrichie en théaflavines.

14. Procédé selon l'une quelconque des revendications précédentes, dans lequel le rapport en poids des catéchines totales aux théaflavines dans ladite source de thé est supérieur à 10.

15. Procédé selon l'une quelconque des revendications précédentes, dans lequel ladite source de thé ne contient pas plus de 10 mg de théaflavines par g en poids sec de solides solubles.
